# EUROPÄISCHE PATENTANMELDUNG

(11) **EP 0 593 999 A1**
(43) Veröffentlichungstag der Anmeldung: **27.04.1994**
(21) Anmeldenummer: 93116313.3
(22) Anmeldetag: 08.10.1993
(51) Int. Cl.: F01K 3/24, F22B 31/04

(54) **Verfahren zur Energiegewinnung bei Müll- oder Sondermüllverbrennungsanlagen**

(30) Priorität: 21.10.1992 DE 4235464
(71) Anmelder: BAYER AG, 51368 Leverkusen (DE)
(72) Erfinder: Dummersdorf, Hans-Ulrich, Dr., D-51381 Leverkusen (DE)

(57) **Zusammenfassung**

Bei dem Verbrennungsverfahren wird ein im Kessel (3) der Verbrennungsanlage angeordneter Verdampfer (5) mit Speisewasser beschickt und dadurch Hochdruckdampf als Sattdampf oder Naßdampf erzeugt, der aus dem Kessel (3) herausgeführt wird und in einem externen Heizkessel (6) überhitzt und anschließend einer Hochdruckdampfturbine (8) zur Stromerzeugung zugeführt wird. Auf diese Weise kann die Verbrennungsenthalpie von Sondermüll und anderen Reststoffen mit einem hohen Wirkungsgrad zur Verstromung des gesamten in der Verbrennungsanlage erzeugten Dampfes durchgeführt werden.

## Beschreibung

Aufgrund der sich kurz- und mittelfristig weltweit verknappenden Energieressourcen und der immer strengeren Umweltanforderungen an industrielle Prozesse, insbesondere hinsichtlich der Emission von Schadstoffen und CO₂, sowie der Nutzung industrieller Wärmequellen ist es in wachsendem Maße notwendig, die Produktionsprozesse energetisch zu optimieren und zu integrieren, um mit einem geringstmöglichen Energieeinsatz und einer geringstmöglichen Schadstoffemission die gewünschten Produkte herstellen zu können. Andererseits machen es die sich verschärfenden Gebote zur Abfallverwertung zunehmend erforderlich, Reststoffe jeglicher Art einer optimalen Verwertung zu unterziehen. Dies kann nicht in jedem Falle eine stoffliche Verwertung sein, im Gegenteil, die Verbrennung von Müll und Sondermüll nimmt einen wichtigen Platz in künftigen Entsorgungskonzepten ein. Insofern ist es von eminenter Bedeutung, künftig die thermische Entsorgung von Reststoffen in Müll- und Sondermüllverbrennungsanlagen gegenüber dem heutigen Stand wesentlich zu verbessern. Die Erfindung betrifft ein Verfahren zur verbesserten energetischen Nutzung des Heizwertes von Reststoffen, die in Müll- und Sondermüllverbrennungsanlagen thermisch verwertet werden.

Beim Betrieb von Müll- und Sondermüllverbrennungsanlagen steht an erster Stelle die sichere, störungsfreie Entsorgung der Reststoffe ohne umweltrelevante Emissionen von Schadstoffen. In der Regel steht die Verwertung des Heizwertes der Reststoffe erst an zweiter Stelle bzw. wird, insbesondere in Anlagen auf dem amerikanischen Kontinent, überhaupt nicht durchgeführt; d.h. es gelangen Anlagen ohne Abhitzekessel zum Einsatz. In Europa werden die meisten Verbrennungsanlagen mit Abhitzekesseln zur Erzeugung von Mitteldruckdampf (im Bereich von 6 bis 42 bar) ausgerüstet. Die Notwendigkeit, den Druck des erzeugten Dampfes zu begrenzen, resultiert aus der bei den eingesetzten Kesselwerkstoffen bei einer Temperatur von 370 bis 400°C einsetzenden verstärkten Hochtemperaturchlorkorrosion und -sulfatkorrosion, die binnen kurzer Zeit den Kessel zerstören kann. Auch bei den genannten üblichen technischen Lösungen (6 bis 42 bar-Kessel) machen sich bei Verbrennung bestimmter Stoffgruppen, deren Zusammenwirken zum Teil noch nicht bekannt ist, u.U. solche Korrosionserscheinungen bemerkbar, die dazu führen können, daß der Kessel nach relativ kurzen Betriebszeiten erneuert werden muß.

In der DE-OS 4 002 258 wird ein Verfahren zur verbesserten energetischen Nutzung von Sondermüll beschrieben, wo in einem Hochtemperatur-Tangentialkessel Feinkoks, Gas und Sauerstoff bei hohen Temperaturen bis 1.600°C verbrannt werden und in diese Umgebung Sondermüll eingeführt und im Kessel umgesetzt wird. Die heißen Rauchgase aus diesem Kessel sollen über eine Entspannung über eine Rauchgasdüse eine Gasturbine antreiben. Ein solcher Kessel ist infolge des notwendigen Überdruckes in der Verbrennung großtechnisch schwierig zu realisieren. Geringe mögliche Überdrücke lassen auch nur geringe Gasturbinenwirkungsgrade zu. Neben der Gefahr des Austrittes organisch und mit Schwermetallen kontaminierter Gase aus dem Überdruckkessel enthalten die in der Rauchgasdüse entspannten Verbrennungsgase hohe Konzentration an Schadkomponenten, wie HCl, SO₂, organische Schadstoffe, Schwermetalle usw., so daß eine Gasturbine durch Korrosion und Ablagerungen in kurzer Zeit unbrauchbar wird. Nachteilig aus wirtschaftlicher Sicht ist auch der notwendige zusätzliche Einsatz von Koksstaub und Brenngasen, sowie teurem Sauerstoff.

Ein weiteres Verfahren zur energetischen Nutzung der etwa 1.000 bis 1.200°C heißen Rauchgase aus Sondermüllverbrennungsanlagen findet sich in der DE-OS 4 006 288. Dabei werden die heißen Abgase aus einer Sondermüllverbrennungsanlage mit Luft vermischt und als so aufgeheizte Verbrennungsluft über einen Ventilator dem Brennraum eines Müllverbrennungsofens zugeführt. Die heißen Rauchgase aus der Sonderabfallverbrennung werden dabei zur Verbesserung der Energiebilanz bei Verbrennung von insbesondere heizwertarmem Müll benutzt. Eine Erzeugung von Gebrauchsenergien auf hohem Niveau ist in diesem Verfahren aber nicht vorgesehen.

Lösungen, die die Verstromung des Sondermüllheizwertes auf hohem exergetischen Niveau über die Erzeugung von Hochdruckdampf im Kessel der Sondermüllverbrennung zum Ziel haben, wurden bisher nicht gefunden.

Es existiert zudem ein weit verbreitetes Vorurteil der Fachwelt in der Form, daß die Erzeugung von Hochdruckdampf in Müll- und Sondermüllverbrennungsanlagen aus Korrosions- und anderen Gründen nicht durchführbar sei.

Es stellt sich daher die Aufgabe, ein Verfahren zu finden, mit welchem der Heizwert der Reststoffe auf maximalem exergetischen Niveau (hohem Temperaturniveau) genutzt werden kann, ohne daß der Kessel der Verbrennungsanlage durch Korrosion gefährdet wird, bzw. eine Minderung dieser Gefahren erreicht werden kann und welches gleichzeitig eine Senkung der Schadstoffemissionen ermöglicht. Diese Forderungen konnten bisher nicht gleichzeitig erfüllt werden.

Die Aufgabe wird erfindungsgemäß dadurch gelöst, daß in der Müllverbrennungsanlage Hochdruckdampf erzeugt wird und zwar so, daß dies in einem Zweistufen-Prozeß geschieht: In einer ersten Stufe wird unmittelbar im Kessel der Müll- oder Sondermüllverbrennungsanlage Hochdruckdampf bis zum Sattdampfzustand erzeugt, anschließend wird der Sattdampf bei der entsprechend gewählten Druckstufe aus dem Kessel geführt und in einem externen Heizkessel überhitzt, dessen Betriebsweise dadurch gekennzeichnet ist, daß er mit einem Regelbrennstoff befeuert wird. Vorzugsweise wird im Verdampfer Hochdruckdampf mit einem Druck von mindestens 8 MPa erzeugt. Der hochgespannte Dampf wird in dem externen Kessel auf die gewünschte Dampfturbineneintrittstemperatur aufgeheizt bzw. überhitzt.

Wenn dem Verdampfer ein so großer Speisewassermengenstrom zugeführt wird, daß der Sattdampfzustand nicht erreicht wird, so wird der entstehende Naßdampf dem externen Heizkessel zur Restverdampfung bis zum Sattdampfzustand und zur Überhitzung zugeführt. Andererseits kann auch der Sattdampfzustand im Verdampfer geringfügig überschritten werden, so daß der hochgespannte Dampf in geringfügig überhitztem Zustand dem externen Heizkessel zur weiteren Überhitzung zugeführt wird. Das Verfahren wird dadurch in seiner Funktion nicht in Frage gestellt.

Unter Nutzung weiterer externer Wärmequellen kann es außerdem zweckmäßig sein, die Vorwärmung des Speisewassers außerhalb des Kessels der Müll- oder Sondermüllverbrennungsanlage ggf. bis zum Siedezustand unter dem beabsichtigten Dampfdruck vorzuwärmen und im Kessel der Müll- oder Sondermüllverbrennungsanlage ausschließlich den Verdampfungsprozeß durchzuführen. Ebenfalls läßt das erfindungsgemäße Verfahren eine zumindest partielle Speisewasservorwärmung im Kessel der Müll- oder Sondermüllverbrennungsanlage zu.

Ist der externe Überhitzer ein separater Apparat, kann es zweckmäßig sein, dessen Rauchgase, die dann in der Regel eine erhöhte Austrittstemperatur besitzen, energetisch zu nutzen, z.B. für die Speisewasservorwärmung.

Das erfindungsgemäße Verfahren ist durch folgende Verfahrensstufen gekennzeichnet:
1. Hochdrücken des Kesselspeisewassers auf einen Druck von vorzugsweise oberhalb von 8 MPa
2. Erhitzung des zugeführten Kesselspeisewassers im oder außerhalb des Kessels der Müll- oder Sondermüllverbrennungsanlage auf Siedezustand
3. Verdampfung des Kesselspeisewassers unmittelbar im Kessel der Müll- oder Sondermüllverbrennungsanlage bis zum Sattdampfzustand oder einem vorgewählten Naßdampfzustand
4. Herausführen des Sattdampfes oder Naßdampfes aus dem Kessel der Müll- oder Sondermüllverbrennungsanlage und Überführung in einen externen, regelbrennstoffbefeuerten Überhitzer
5. Überhitzung des Sattdampfes oder Naßdampfes im externen, regelbrennstoffbefeuerten Überhitzer auf eine gewünschte Turbineneintrittstemperatur
6. Verstromung des erfindungsgemäß erzeugten Hochdruckdampfes in der Dampfturbine.

Im Kessel einer Müll- oder Sondermüllverbrennungsanlage, welcher vom ungereinigten Rohgas aus der Verbrennungsstufe durchströmt wird, treten zum Teil schwerwiegende Korrosionsprobleme auf. Dies wird bewirkt von den Rauchgasinhaltsstoffen, wie HF, HCl, Sulfate, Phosphate u.v.a. einzeln als auch durch deren komplexes chemisches Zusammenwirken. Besonders schwerwiegend wird dieser Korrosionseinfluß, der Kesselbestandteile schon nach kurzer Zeit vollständig zerstören kann, wenn Materialtemperaturen von 370°C überschritten werden. Mit dem erfindungsgemäßen Verfahren wird erreicht, daß sich die im Rauchgasstrom der Müll- oder Sondermüllverbrennungsanlage befindlichen Kesselteile selbst bei hohen Rauchgastemperaturen im Bereich niedriger Wandtemperaturen befinden. Dies gelingt dadurch, daß im Kessel der Müll- oder Sondermüllverbrennungsanlage nur die Hochdruckverdampfung durchgeführt wird. Unter Hochdruckbedingungen werden sehr hohe Wärmeübergangskoeffizienten α; in den Verdampferrohren erreicht (bis 10⁵ W/m2/K). Dadurch kann die Innen- und auch die Außenwandtemperatur des Verdampfers bei den notwendigen Wärmestromdichten nur geringfügig oberhalb der Temperatur des Dampfes im Inneren (erfindungsgemäß vorwiegend Sattdampf) gehalten werden, so daß Sattdampfdrücke bis ca. 170 bar im Kessel der Müllverbrennungsanlage gefahren werden können, ohne daß eine Gefährdung des Kesselmaterials auftritt. die Überhitzung des Sattdampfes auf eine notwendige Turbineneintrittstemperatur von zumeist oberhalb 500°C, z.T. auch oberhalb 600°C wird dann im externen regelbrennstoffbefeuerten Überhitzer durchgeführt, wobei bei der Überhitzung um Größenordnungen kleinere α;-Werte auftreten, was hohe Außenwandtemperaturen des Überhitzers bedingt. Die Rauchgase des regelbrennstoffbefeuerten Überhitzers jedoch enthalten keine oder nur wenige Schadstoffkomponenten in geringen Mengen, welche eine Korrosion hervorrufen könnten.

Mit der Erfindung werden folgende Vorteile erzielt:
1. Die Verbrennungsenthalpie von Sondermüll und anderen Reststoffen kann auf einem hohen exergetischen Niveau mit beachtlichen wirtschaftlichen Vorteilen durch die Verstromung des gesamten in der Verbrennungsanlage erzeugten Dampfes durchgeführt werden.
2. Mit Hilfe des erfindungsgemäßen Verfahrens läßt sich eine optimale Wärme-Kraft-Kopplung an Müll- oder Sondermüllverbrennungsanlagen realisieren, was in dieser Form bisher nicht möglich war.
3. Die Erzeugung von hochgespanntem Sattdampf oder Naßdampf im Kessel der Müllverbrennungsanlage schafft aufgrund des verbesserten Wärmeaustausches im Kessel die Voraussetzung, den Verbrennungsprozeß bei höheren Rauchgastemperaturen (ca. 400°C) zu betreiben, was die Neubildung von Dioxinen und Furanen im Kessel behindert. Außerdem kann bei der Rauchgasreinigung der zumeist nachfolgende schnelle Quenchprozeß bei einer Starttemperatur von ca. 400°C auf eine Temperatur unterhalb 300°C durchführt werden, wodurch ebenfalls die Dioxinneubildung wirksam unterdrückt wird.
4. Die Realisierung des erfindungsgemäßen Verfahrens erfordert relativ niedrige zusätzliche Investitionskosten. Zur Anlage kommt lediglich der externe Heizkessel hinzu. Im Übrigen wird nur der übliche Niederdruck- oder Mitteldruckkessel durch einen Hochdruckkessel ersetzt.

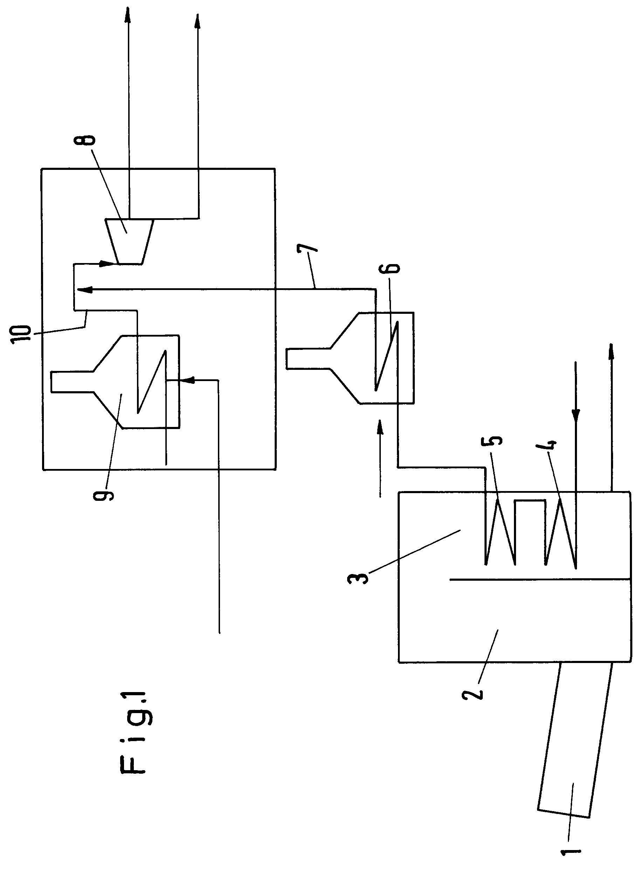

Das erfindungsgemäße Verfahren ist in einer speziellen Ausführungsform als Grobschaltbild in Fig. 1 dargestellt und soll anhand dieser Darstellung erläutert werden:
Im Drehrohr 1 einer Sondermüllverbrennungsanlage wird Sonderabfall verbrannt. Die entstehenden heißen und kontaminierten Rauchgase werden einer Nachbrennkammer 2 zugeführt, wo, gegebenenfalls unter Zufeuerung hochkalorischer Brennstoffe oder flüssiger Abfallstoffe Temperaturen bis 1.200°C erzeugt werden. An die Nachbrennkammer schließt sich der Kessel 3 der Verbrennungsanlage an, in welchem ein Speisewasservorwärmer 4 und ein Verdampfer 5 angeordnet sind. Der Ausgang des Verdampfers 5 ist mit einem externen Heizkessel 6 verbunden, der mit einem Regelbrennstoff befeuert wird. Der entstehende Heißdampf wird über die Leitung 7 einer Hochdruckdampfturbine 8 zur Stromerzeugung zugeführt. Häufig ist bereits ein Kraftwerk 9 vorhanden. Der überhitzte Heißdampf wird dann in die Verbindungsleitung 10 vom Kraftwerk 9 zur Dampfturbine 8 eingespeist.

An einem Beispiel soll die Wirkungsweise des erfindungsgemäßen Verfahrens erläutert werden:
Die Verbrennungsstufe der Sondermüllverbrennungsanlage, bestehend aus dem Drehrohr 1 und der Nachbrennkammer 2 arbeiten in an sich bekannter Weise und dienen der Entsorgung von hochchlorhaltigen Abfällen. Bedingt durch die Verbrennung dieser Substanzen befinden sich im Rauchgas, welches den Kessel 3 passiert, HCl-Konzentrationen von 10 g/m³ Rauchgas, die unter Hochtemperatur-Korrosionsbedingungen (> 400°C) ein erhebliches Gefährdungspotential darstellen und den Kessel binnen kurzer Zeit unbrauchbar machen würden. In den Speisewasservorwärmer 4 des Kessels 3 werden nun ca. 30 t/h auf 100 bar hochgedrücktes und mit 6 bar-Dampf bereits auf 130°C vorgewärmtes Speisewasser geführt und auf die Siedetemperatur von 316°C erhitzt, anschließend erfolgt im Verdampfer 5 des Kessels 3 die Verdampfung des Speisewassers bis zum Sattdampfzustand, d.h. bis zum Dampfgehalt x=1 und der Temperatur von 316°C. Die dem Speisewasservorwärmer zugeführte Speisewassermenge wird mit der Dampftemperatur als Regelgröße so geregelt, daß am Austritt des Verdampfers 5 genau der Sattdampfzustand vorliegt. Der Sattdampf wird nunmehr aus dem Kessel 3 der Müllverbrennungsanlage hinausgeführt, im externen erdgasbefeuerten Heizkessel 6 auf 560°C überhitzt, in die Frischdampfleitung 10 des Kraftwerkkessels 7 eingespeist und mit diesem gemeinsam in der Hochdruckturbine 8 verstromt. Dies erfolgt bis zum Zustand eines Gegendruckes von 30 bar, der als Heizdampf in weiteren Produktionen benötigt wird.

Im Kessel 3 der Sondermüllverbrennung werden, insbesondere im Verdampfer 5 Wärmeübergangskoeffizienten von 30.000 W/m²/K erreicht, was zu Rohraußentemperaturen und damit auch zu Kesselwandtemperaturen von 335 bis 340°C führt. In diesem Bereich tritt noch keine Gefährdung des Kessels durch Chlor- oder Sulfatkorrosion auf. Im externen erdgasbefeuerten Überhitzer 6 kann nun die Überhitzung des hochgespannten Sattdampfes mit niedrigen Wärmeübergangskoeffizienten (100-200 W/m²/K) und hohen Wandaußentemperaturen (500 bis 600°C) erfolgen, da keine Gefährdung durch korrodierende Rauchgasbestandteile besteht. Durch Anwendung des erfindungsgemäßen Verfahrens können zusätzlich 5 MW Strom erzeugt werden, was eine erhebliche Energieeinsparung bedeutet.

Eine mögliche Variante des erfindungsgemäßen Verfahrens besteht darin, daß als externer Überhitzer 6 der Überhitzer eines vorhandenen regulären Kraftwerkkessels benutzt wird. In diesem Fall reduzieren sich die Investitionskosten wesentlich.

## Patentansprüche

1. Verfahren zur Energiegewinnung bei Müll- oder Sondermüllverbrennungsanlagen, dadurch gekennzeichnet, daß ein im Kessel der Müll- oder Sondermüllverbrennungsanlage angeordneter Verdampfer mit Speisewasser beschickt wird und dadurch Hochdruckdampf als Sattdampf oder Naßdampf erzeugt wird, und daß der so erzeugte Satt- oder Naßdampf aus dem Kessel herausgeführt, in einem externen Heizkessel überhitzt und anschließend einer Hochdruckdampfturbine zur Stromerzeugung zugeführt wird.

2. Verfahren nach Anspruch 1, dadurch gekennzeichnet, daß im Verdampfer Hochdruckdampf mit einem Druck von mindestens 8 MPa erzeugt wird.

3. Verfahren nach Anspruch 1 bis 2, dadurch gekennzeichnet, daß die Austrittstemperatur des Satt- oder Naßdampfes am Verdampfer über den Mengenstrom des Speisewassers eingestellt und geregelt wird.

4. Verfahren nach Anspruch 1 bis 3, dadurch gekennzeichnet, daß das Speisewasser außerhalb des Kessels vorgewärmt wird.

5. Verfahren nach Anspruch 1 bis 3, dadurch gekennzeichnet, daß das Speisewasser zumindest partiell innerhalb des Kessels vorgewärmt wird.
